# EUROPEAN PATENT APPLICATION

(11) **EP 1 521 169 A2**
(43) Date of publication of application: **06.04.2005**
(21) Application number: 04022430.5
(22) Date of filing: 21.09.2004
(51) Int. Cl.: G06F 3/06

(54) **Method and apparatus for increasing storage capacity in a disk array system**

(30) Priority: 30.09.2003 JP 2003339987
(71) Applicant: Kabushiki Kaisha Toshiba, Tokyo 105-8001 (JP)
(72) Inventor: Abe, Tomonori, c/o Toshiba Corporation, Minato-ku Tokyo 105-8001 (JP); Kurashige, Takehiko, c/o Toshiba Corporation, Minato-ku Tokyo 105-8001 (JP)
(74) Representative: Henkel, Feiler & Hänzel

(57) **Abstract**

There is disclosed a RAID controller (10) including a function of increasing a storage capacity in a RAID system. The RAID controller (10) executes an error check with respect to an original disk drive (20), and reads data which is a scattering object from the original disk drive (20) to write the data into an additional disk drive (21) in a first stage of a process. The RAID controller (10) executes a rewrite process with respect to the original disk drive (20) in a second stage of the process.

## Description

The present invention generally relates to a disk array system, particularly to an apparatus and method for increasing a storage capacity.

In general, as a disk array (or RAID: redundant arrays of inexpensive disks) system, a RAID system (RAID-0) including a striping constitution in which data is scattered by a block unit and having level 0, a RAID system (RAID-1) including a mirroring constitution in which the same data is stored in a plurality of disk drives and having level 1 and the like are well known.

A RAID controller has a capacity increasing function of increasing a storage capacity for realizing a system of RAID-0, and a copying function for realizing a system of RAID-1. Particularly by the capacity increasing function, data recorded in a disk drive is scattered in an added disk drive, the data recorded in an original disk drive is rearranged, and accordingly the storage capacity of the data can be increased as a whole (see, for example, Jpn. Pat. Appln. KOKAI Publication No. 7-141121).

In a conventional capacity increasing function, a capacity increasing process in which a rewrite process for reading data as a scattering object from the original disk drive, recording the data in the additional disk drive, and rearranging the data recorded in the original disk drive is performed is continuously carried out as a one-stage process.

In the capacity increasing method, when starting the capacity increasing process, it is difficult to discontinue the process halfway, for example, even if reading errors of the original disk drive are generated. If the process is discontinued halfway, it is generally difficult to return to the process in a case where original recorded data is deleted by the rewrite process of the original disk drive.

An object of the present invention is to provide a RAID control apparatus including facilities which execute resuming a process, when the process to increase a storage capacity is discontinued during execution.

The RAID control apparatus comprises: an input/output control unit which controls input/output of data with respect to disk drives included in a disk array system; and a capacity increasing unit to execute a process of increasing a storage capacity in which the data recorded in an original disk drive is scattered in an additional disk drive, and to execute a process of rewriting the data recorded in the original disk drive, after reading data which is a scattering object from the original disk drive to complete the recording with respect to the additional disk drive.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram showing a constitution of a RAID system according to an embodiment of the present invention;
FIG. 2 is a block diagram showing a constitution of a RAID controller according to the present embodiment;
FIG. 3 is an explanatory view of a process of increasing a storage capacity according to a first embodiment;
FIG. 4 is a flowchart showing a procedure of the process of increasing the storage capacity according to the first embodiment;
FIG. 5 is an explanatory view of the process of increasing the storage capacity according to a second embodiment;
FIG. 6 is an explanatory view of the process of increasing the storage capacity according to a third embodiment; and
FIG. 7 is a flowchart showing a procedure of the process of increasing the storage capacity according to the second embodiment.

Embodiments of the present invention will be described hereinafter with reference to the drawings.

### (System Constitution)

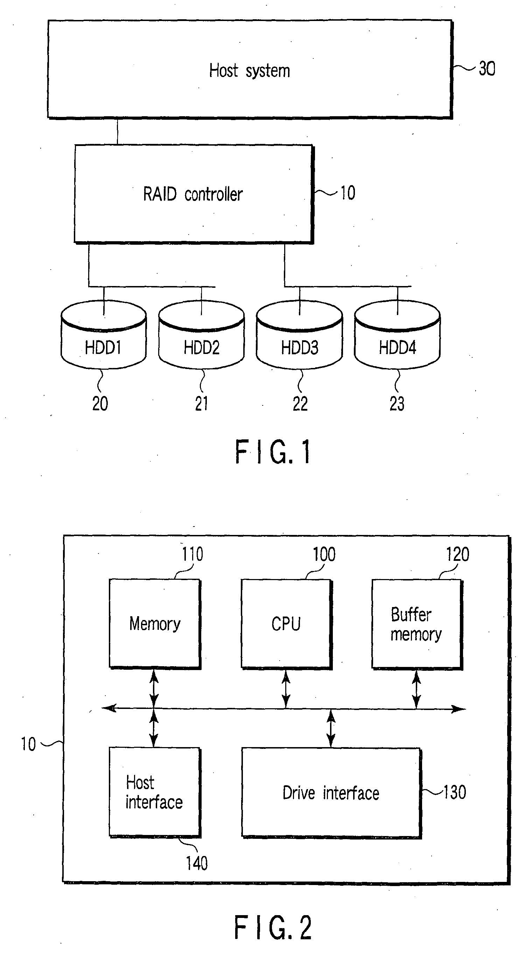

FIG. 1 is a block diagram showing a constitution of a disk array system (RAID system) according to the following embodiments. FIG. 2 is a block diagram showing a constitution of a RAID controller according to the following embodiments.

As shown in FIG. 1, a RAID controller 10 of the present embodiment is connectable, for example, to first to fourth disk drives 20 to 23 to realize a RAID-0 system, a RAID-1 system, or a RAID system (referred to as the RAID-10 system for convenience) in which they are combined.

The RAID controller 10 issues a command necessary for controlling input/output (read and write operations) of data with respect to the respective disk drives 20 to 23 in response to an access request (command) from a host system (including OS), for example, including a personal computer, a server and the like.

As shown in FIG. 2, the RAID controller 10 has a microprocessor (CPU) 100, a memory 110, a buffer memory 120, a drive interface 130, and a host interface 140.

The CPU 100 is a main control device which executes a RAID control operation including a capacity increasing function (striping function) of the present embodiment. The memory 110 includes a ROM in which a program of the CPU 100 is stored, a flash EEPROM, and a RAM. The buffer,memory 120 includes a buffer RAM and a cache memory.

The drive interface 130 corresponds to a microcontroller which is connected to a plurality of disk drives 20 to 23 and which controls the input/output of the data. In the present embodiment, for example, four disk drives can be connected. The host interface 140 is an interface which controls the transfer of data and commands with respect to the host system (personal computer, server, etc.) 30 in which RAID is used as an external storage device.

It is to be noted that the RAID controller 10 of the present embodiment may be constituted of a hardware logic circuit for exclusive use instead of other constituting elements excluding the drive interface 130 and host interface 140. Concretely, in the present embodiment, the RAID controller 10 may be a card type controller attached to a card slot disposed, for example, in the personal computer and connected to a plurality of disk drives to realize the RAID.

### (Capacity Increasing Process)

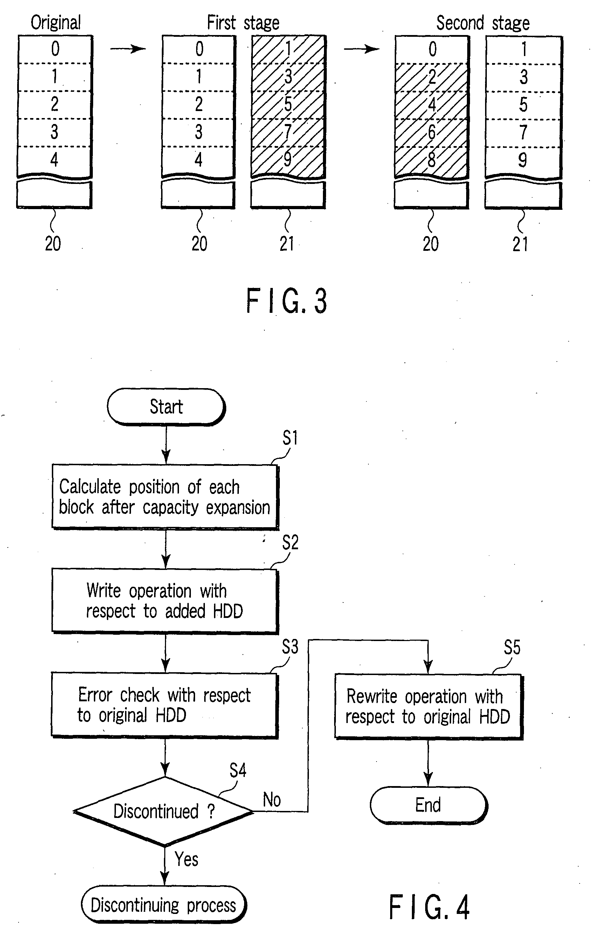

A procedure of the capacity increasing process of the first embodiment will be described hereinafter with reference to flowcharts of FIGS. 3 and 4.

Here, the RAID controller 10 executes the capacity increasing process using the first disk drive (disk drive 1) 20 as an original disk drive in which original recorded data is stored and using the second disk drive 21 as an added disk drive.

As shown in FIG. 3, the RAID controller 10 of the present embodiment divides the capacity increasing process into a first-stage process and a second-stage process, and executes the processes. That is, in a first stage, the RAID controller 10 executes a process of reading data (block unit) which is a scattering object from the original disk drive 20 to write (record) the data in the additional disk drive 21. It is to be noted that in FIG. 3, a slant-line part shows data of a written or-rewritten portion.

After completing the recording of the data which is the scattering object in the first-stage process, the process shifts to the second-stage process. In the second stage, the RAID controller 10 executes a rewrite process for rearranging data other than the data which is the scattering object from the original disk drive 20.

A procedure of the capacity increasing process will be further concretely described hereinafter with reference to the flowchart of FIG. 4.

First, in a first stage of the process, the RAID controller 10 determines a storage position of the data (block unit) after capacity increase (step S1). That is, as shown in FIG. 3, the RAID controller 10 determines sector addresses which are recording areas of the disk drives 20, 21 of original recorded data (0, 1, 2...) by the block unit.

Furthermore, the RAID controller 10 reads the data (block unit) which is the scattering object from the original disk drive 20, and writes the data into a determined storage position (sector) on the additional disk drive 21 (step S2). In the first stage of the process, the RAID controller 10 only checks errors (reading errors) without executing a rewrite process with respect to the original disk drive 20 (step S3).

In the first stage of the process, on confirming generation of the error from the original disk drive 20, the RAID controller 10 discontinues the capacity increasing process (YES in step S4). The RAID controller 10 executes an error correction process to restore the recorded data in which the reading error has been generated, for example, in the original disk drive 20 at the time of a discontinuing process. Accordingly, the RAID controller 10 can resume the capacity increasing process from the beginning.

On the other hand, when any error is not generated, and the write operation of the data with respect to the additional disk drive 21 completes, the process shifts to the second stage of the process. In the second stage, the RAID controller 10 executes the rewrite process for rearranging data other than the data which is the scattering object from the original disk drive 20 (step S5).

As described above, in a method of increasing the capacity in the first embodiment, the rewrite process with respect to the original disk drive 20 is not executed, and the write operation with respect to the additional disk drive 21 is executed in the first stage of the process.

Here, when the error is generated in the original disk drive 20, even with the discontinuation of the capacity increasing process, the original recorded data (excluding the data in which the error is generated) is stored as such in the original disk drive 20. Therefore, when an error restoring process with respect to the original disk drive 20 is executed, the capacity increasing process can be resumed from the beginning.

Moreover, in the first stage of the process, the original disk drive 20 is checked for errors. Accordingly, there is not any error in the original disk drive 20 before the process shifts to the first stage of the process, and assurance with respect to the original recorded data can be secured.

In short, even when the error is generated in the capacity increasing method of the present embodiment, the process can return, most of the original recorded data stored in the original disk drive 20 is maintained, and therefore maintainability of the data can be enhanced.

Additionally, the capacity increasing process includes a process of writing (i.e., copying) the data which is the scattering object from the original disk drive 20 into the additional disk drive 21. In this case, the data recorded in the original disk drive 20 is usually accessed to the last, and the copying process is executed. In the copying process, a usual access range is set with respect to the original disk drive 20, accordingly the copying process is omitted with respect to unused data, and, as a result, time required for the capacity increasing process can be shortened.

### (Second Embodiment)

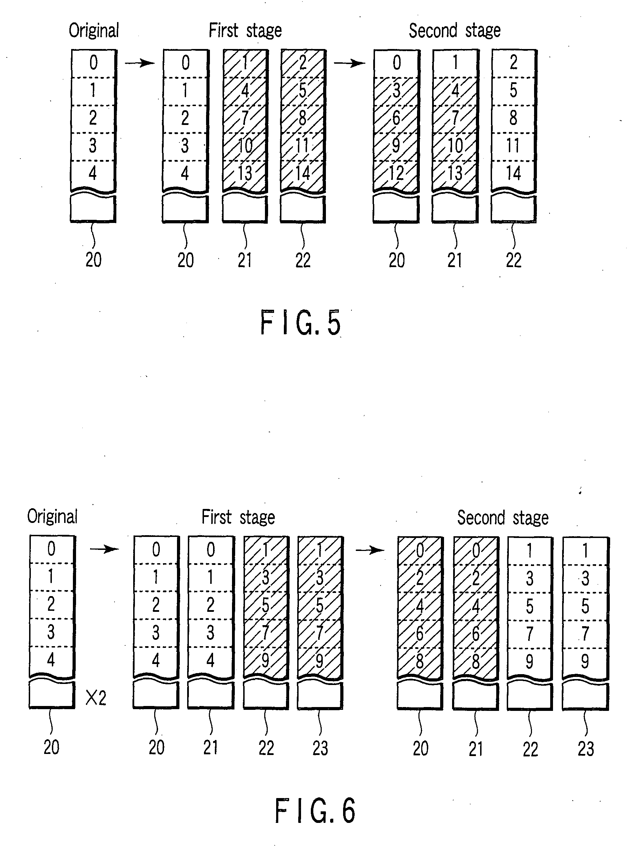

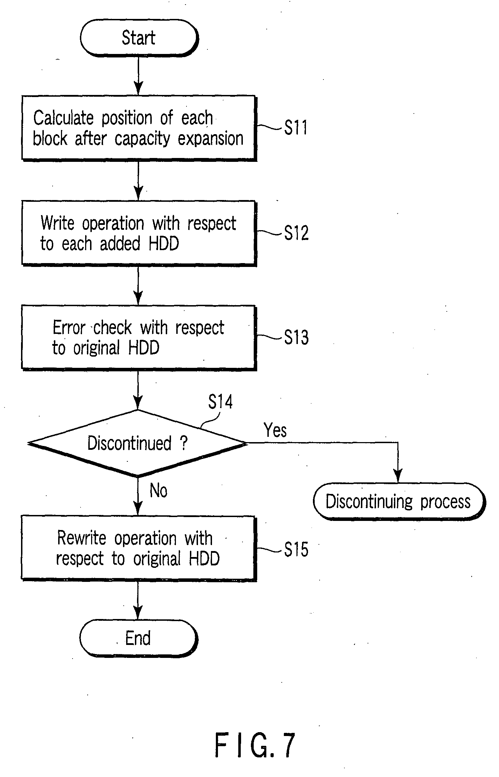

FIGS. 5 and 7 show a capacity increasing method in a case where the data from the original disk drive 20 is scattered with respect to a plurality of additional disk drives.

In the present embodiment, the plurality of additional disk drives include a first additional disk drive (disk drive 2) 21 and a second additional disk drive (disk drive 2) 22.

First, in a first stage of the process, the RAID controller 10 determines a storage position of the data (block unit) after capacity increase (step S11). That is, as shown in FIG. 5, the RAID controller 10 determines sector addresses which are recording areas of the disk drives 20, 21, 22 of original recorded data (0, 1, 2...) by the block unit.

Furthermore, the RAID controller 10 reads the data (block unit) which is a scattering object from the original disk drive 20, and writes the data into determined storage positions (sectors) on the additional disk drives 21 and 22 (step S12). In the first stage of the process, the RAID controller 10 only checks errors (reading errors) without executing a rewrite process with respect to the original disk drive 20 (step S13).

In the first stage of the process, on confirming generation of the error from the original disk drive 20, the RAID controller 10 discontinues the capacity increasing process (YES in step S14). The RAID controller 10 executes an error correction process to restore the recorded data in which the reading error has been generated, for example, in the original disk drive 20 at the time of a discontinuing process. Accordingly, the RAID controller 10 can resume the capacity increasing process from the beginning.

On the other hand, when any error is not generated, and the write operation of the data with respect to the additional disk drives 21, 22 completes, the process shifts to the second stage of the process. In the second stage, the RAID controller 10 executes a rewrite process for rearranging data other than the data which is the scattering object from the original disk drive 20 (step S15).

As described above, also in the second embodiment, in the first stage of the process, the rewrite process with respect to the original disk drive 20 is not executed, and the write operation with respect to the additional disk drives 21, 22 is executed. Therefore, when the error is generated in the original disk drive 20, and an error restoring process or the like is executed, the capacity increasing process can be resumed from the beginning. Therefore, even when the error is generated, the process can return, most of the original recorded data stored in the original disk drive 20 is maintained, and therefore maintainability of the data can be enhanced.

### (Third Embodiment)

FIG. 6 is a diagram showing a third embodiment. In the present embodiment, a copying process for realizing a mirroring constitution (RAID-1) in which the same data is stored in a plurality of disk drives is executed together with a capacity increasing process.

The RAID controller 10 executes the capacity increasing process and copying process using the first disk drive (disk drive 1) 20 as an original disk drive in which original recorded data is stored and using second to fourth disk drives 21 to 23 as added disk drives.

Concretely, in a first stage of the process, as shown in FIG. 6, the RAID controller 10 copies all recorded data to the first additional disk drive 21 from the original disk drive 20 to realize the mirroring constitution. Furthermore, the RAID controller 10 executes a process of reading data (block unit) which is a scattering object from the original disk drive 20 to write (record) the data into the additional disk drive 22. Moreover, the RAID controller 10 copies all the recorded data to the additional disk drive 23 from the additional disk drive 22 to realize the mirroring constitution.

After completion of the first stage of the process, the process shifts to a second stage of the process. In a second stage, the RAID controller 10 executes a rewrite process for rearranging data other than the data which is the scattering object from the original disk drive 20, and copies the rewritten recorded data to the additional disk drive 21.

As described above, in the method of the third embodiment, in the first stage of the process, the rewrite process with respect to the original disk drive 20 is not executed, and the write operation is executed accompanying the copying process or the capacity increasing process with respect to the respective additional disk drives 21 to 23.

Here, when the error is generated in the original disk drive 20, even with the discontinuation of the capacity increasing process, the original recorded data is stored as such in the original disk drive 20. Therefore, when an error restoring process with respect to the original disk drive 20 is executed, the copying process or the capacity increasing process can be resumed from the beginning. Moreover, in the first stage of the process, the original disk drive 20 is checked for errors. Accordingly, there is not any error in the original disk drive 20 before the process shifts to the first stage, and assurance with respect to the original recorded data can be secured.

It is to be noted that the RAID controller 10 of the present embodiment may have a function of displaying one or all of an operation progress ratio, elapsed time, remaining time and the like in one bar graph, a circle graph, numerical display or the like through all the stages of the capacity increasing process.

According to the first to the third embodiments, even when the capacity increasing process is discontinued during the execution of the process, the process can be resumed from the beginning. As a result, a useful RAID system capable of enhancing the maintainability of the recorded data can be realized.

## Claims

1. A RAID control apparatus having an input/output control unit (130) which controls input/output of data with respect to disk drives (20 to 23) included in a disk array system, **characterized by** comprising:
a capacity increasing unit (100) to execute a process of increasing a storage capacity in which the data recorded in an original disk drive (20) is scattered in an additional disk drive, and to execute a process of rewriting the data recorded in the original disk drive (20), after reading data which is a scattering object from the original disk drive (20) to complete the recording with respect to the additional disk drive (21).

2. The RAID control apparatus according to claim 1, **characterized in that** the capacity increasing unit (100) executes an error check of the original disk drive (20), when recording the data which is the scattering object in the additional disk drive (21).

3. The RAID control apparatus according to claim 1, **characterized in that** the capacity increasing unit (100) executes an error check of the original disk drive (20), when recording the data which is the scattering object in the additional disk drive (21), and
discontinues the capacity increasing process, when an error of the original disk drive (20) is generated.

4. The RAID control apparatus according to claim 1, **characterized in that** the capacity increasing unit (100) executes the rewrite process of the recorded data of the original disk drive (20) after completing the recording of the data which is the scattering object with respect to the additional disk drive in a case where the additional disk drive includes a plurality of disk drives (21, 22).

5. The RAID control apparatus according to claim 1, **characterized in that** the original disk drive is constituted of first and second disk drives (20, 21) including a mirroring constitution, and
the capacity increasing unit (100) copies the data recorded in a first additional disk drive (21) to a second additional disk drive (22), after reading the data which is the scattering object from the original first disk drive (20) to complete the recording with respect to the first additional disk drive (21), and
executes a rewrite process of the first and second original disk drives (20, 21) including the mirroring constitution, after completing the copying process.

6. A method of increasing a storage capacity in a disk array system including disk drives, the method **characterized by** comprising:
determining (S1) a storage position in which data recorded in an original disk drive included in the disk drives is scattered in an additional disk drive;
reading (S2) data which is a scattering object from the original disk drive to record the data in the determined storage position of the additional disk drive; and
executing (S5) a rewrite process of the original disk drive after completing the recording with respect to the additional disk drive.

7. The method according to claim 6, **characterized by** further comprising:
executing (S3) an error check of the original disk drive, when recording the data which is the scattering object in the additional disk drive.

8. The method according to claim 6, **characterized by** further comprising:
executing (S3) an error check of the original disk drive, when recording the data which is the scattering object in the additional disk drive; and
discontinuing (S4) a recording operation with respect to the additional disk drive, when an error of the original disk drive is generated.

9. The method according to claim 6, **characterized in that** the executing of the rewrite process comprises:
executing (S5) the rewrite process of the recorded data of the original disk drive after completing the recording of the data which is the scattering object with respect to the additional disk drive in a case where the additional disk drive includes a plurality of disk drives.

10. The method according to claim 6, wherein the original disk drive is constituted of first and second disk drives including a mirroring constitution,
the method **characterized by** further comprising:
copying (S12) the data recorded in a first additional disk drive to a second additional disk drive, after reading the data which is the scattering object from the original first disk drive to complete the recording with respect to the first additional disk drive, and
executing (S15) a rewrite process of the first and second original disk drives including the mirroring constitution, after completing the copying process.
